Europäisches Patentamt

(19) European Patent Office

Office européen des brevets

(11) Numéro de publication: **0 310 512**
**A1**

(12) # DEMANDE DE BREVET EUROPEEN

(21) Numéro de dépôt: **88402463.9**

(22) Date de dépôt: **29.09.88**

(51) Int. Cl.⁴: **H 04 M 1/66**

(30) Priorité: **01.10.87 FR 8713579**

(43) Date de publication de la demande:
**05.04.89 Bulletin 89/14**

(84) Etats contractants désignés:
**BE CH DE ES GB IT LI**

(71) Demandeur: **Génin, Jacques**
**12, rue Raffet**
**F-75016 Paris (FR)**

(72) Inventeur: **Génin, Jacques**
**12, rue Raffet**
**F-75016 Paris (FR)**

(74) Mandataire: **Mongrédien, André et al**
**c/o BREVATOME 25, rue de Ponthieu**
**F-75008 Paris (FR)**

(54) **Dispositif de protection de ligne téléphonique à dipole actif.**

(57) Selon lequel, on insère, entre les deux fils (A et B) de la ligne, un dipôle actif (DA) susceptible de présenter une basse ou une haute impédance. Ce dipôle comprend un amplificateur opérationnel (AMP) dont la sortie (2) permet d'analyser les tentatives de numérotation.

Application à la protection des lignes téléphoniques.

FIG. 3

EP 0 310 512 A1

Description

## DISPOSITIF DE PROTECTION DE LIGNE TELEPHONIQUE A DIPOLE ACTIF

La présente invention a pour objet un dispositif de protection de ligne téléphonique à dipôle actif.

Le réseau téléphonique actuel est conçu de telle manière que les opérations que l'abonné doit accomplir pour téléphoner sont réduites à un minimum. L'abonné n'a qu'à décrocher son combiné pour obtenir un signal de tonalité et pour ensuite composer le numéro désiré.

Mais cette simplicité a un revers : il est aisé à un intrus de brancher un poste téléphonique sur une ligne téléphonique en un point situé entre le poste d'abonné et le central téléphonique correspondant. L'intrus peut alors téléphoner sa guise à l'aide de ce poste, le coût des communications étant imputé à l'abonné du poste.

On a déjà proposé des dispositifs permettant d'éviter cet inconvénient. Ceux qui se rapprochent le plus de la présente invention consistent en un circuit inséré entre les deux fils de la ligne, ce circuit pouvant prendre deux états, l'un de haute impédance autorisant le fonctionnement normal de la ligne, l'autre de basse impédance interdisant le fonctionnement de celle-ci.

Le dispositif décrit dans la demande de brevet EP-0 126 496 est de ce type. Il comprend un circuit d'inhibition consistant en une première branche constituée par une diode Zener et une résistance, et une seconde branche constituée par un interrupteur et une faible résistance. Lorsque l'abonné décroche, des moyens qui détectent en permanence l'état de la ligne, ferment l'interrupteur, ce qui dérive le courant de ligne à travers la seconde branche. La numérotation, supposée accomplie par un poste à cadran modulant le courant en tout ou rien, est alors rendue inefficace, le central ne détectant aucune interruption du courant.

Le dispositif décrit dans ce document comprend encore un moyen pour reconnaître un code émis à partir du poste téléphonique et pour, en cas de coïncidence avec un code confidentiel préalablement enregistré, mettre hors service la branche d'inhibition et autoriser ainsi la numérotation ultérieure.

Si ce dispositif donne satisfaction à certains égards, il présente néanmoins un inconvénient qui est d'être limité au cas des postes téléphoniques cadran dont la numérotation s'effectue par impulsions. Il ne fonctionne donc pas dans le cas, de plus en plus fréquent aujourd'hui, des postes à clavier à numérotation par fréquences vocales.

Le but de l'invention est de remédier à cet inconvénient en proposant un dispositif qui fonctionne avec tout type de poste téléphonique, qu'il soit à cadran ou à clavier. Ce but est atteint grâce l'utilisation, comme circuit d'inhibition, d'un dipôle actif amplificateur opérationnel capable de présenter une impédance quasi nulle pour tout signal alternatif. Ce dipôle actif permet également l'analyse des tentatives de numérotation.

De façon précise, la présente invention a pour objet un dispositif de protection de ligne téléphonique du genre de ceux qui comprennent :
- un circuit d'inhibition apte à être inséré entre les deux fils de la ligne, ce circuit pouvant prendre deux états, l'un de haute impédance autorisant le fonctionnement normal de la ligne, l'autre de basse impédance interdisant le fonctionnement de cette ligne,
- un module de gestion disposé entre les fils de ligne, ce module remplissant les fonctions d'alimentation, de détection de l'état de la ligne, de commande du circuit dans l'un de ses deux états à basse ou à haute impédance ;
le dispositif de l'invention étant caractérisé par le fait que le circuit d'inhibition inséré entre les deux fils de ligne est un dipôle actif comprenant un amplificateur opérationnel, ce dipôle étant capable de présenter l'une ou l'autre de ces deux impédances basse et haute, quelle que soit la nature du signal de numérotation, la sortie de l'amplificateur offrant une tension permettant d'analyser les tentatives de numérotation, cette sortie étant reliée, à travers un condensateur, au module de gestion.

De toute façon, l'invention sera mieux comprise à la lumière de la description qui va suivre, d'exemples de réalisation donnés à titre explicatif et nullement limitatif. Cette description se réfère à des dessins annexés sur lesquels :

- la figure 1 est un schéma général montrant la place occupée par un dispositif de protection de ligne téléphonique,
- la figure 2 montre l'organisation générale du dispositif de l'invention,
- la figure 3 illustre un premier exemple de réalisation du dipôle de l'invention,
- la figure 4 illustre un second exemple de réalisation du dipôle de l'invention,
- la figure 5 montre l'organisation générale du module de gestion,
- la figure 6 illustre le fonctionnement du module de gestion.

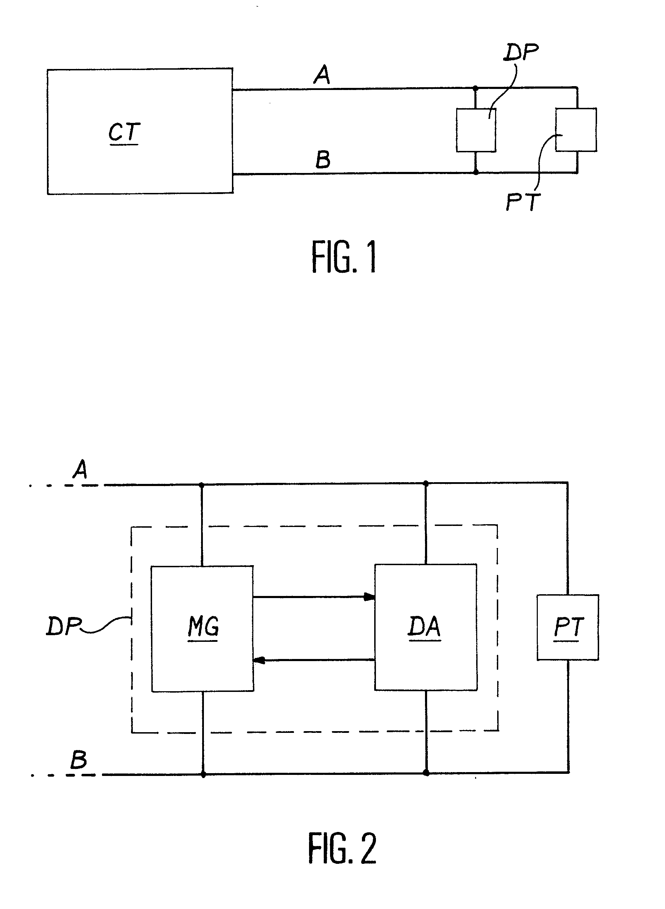

Sur la figure 1, on voit une ligne téléphonique constituée de deux fils A et B, un poste téléphonique PT et un central téléphonique CT. Le dispositif de protection DP se place entre les deux fils de ligne, en un endroit quelconque de la ligne entre le poste et le central.

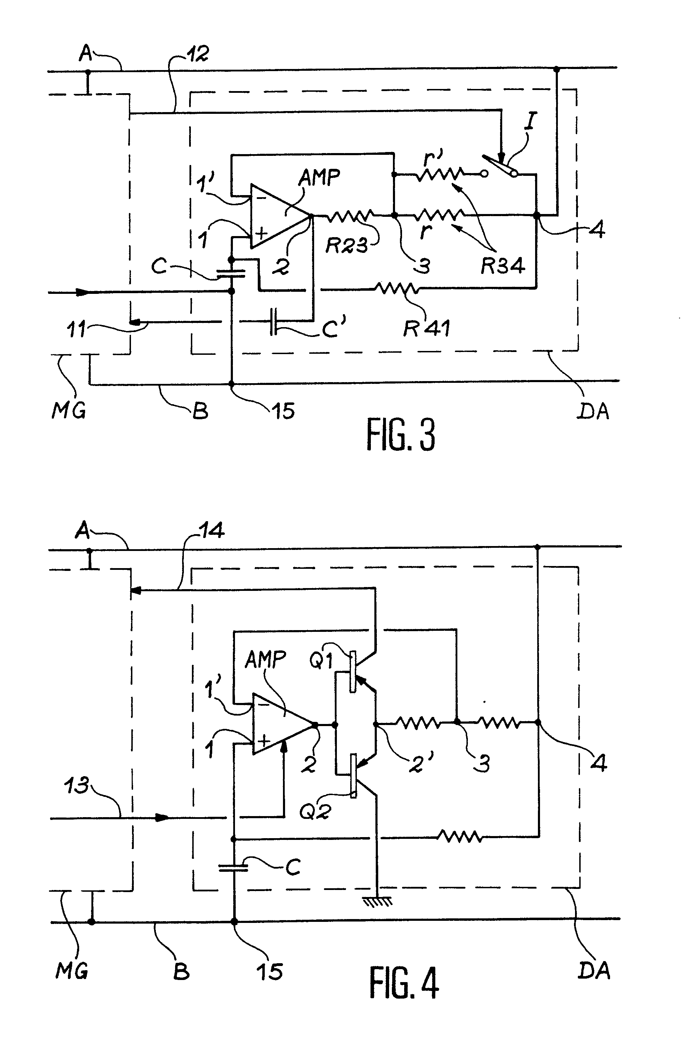

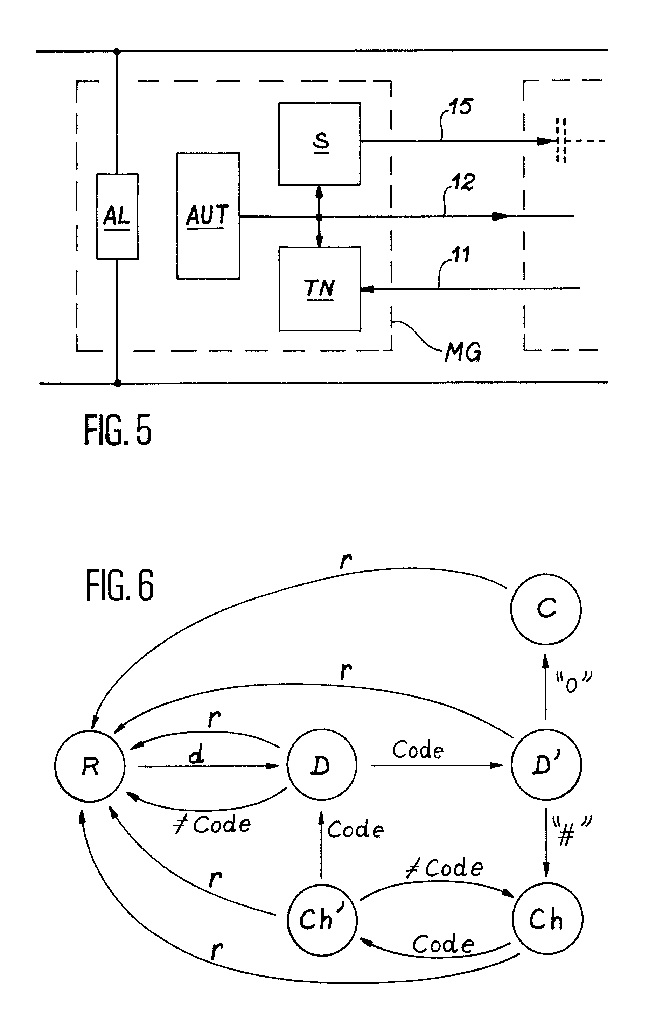

Le dispositif de protection est constitué de deux sous-ensembles, comme illustré sur la figure 2 : un dipôle actif DA et un module de gestion MG. Les variantes d'exécution du dipôle sont représentées sur les figures 3 et 4 alors que le module de gestion est décrit par les figures 4 et 5.

Tel que représenté sur la figure 3, le dipôle actif de l'invention comprend un amplificateur opérationnel AMP à une entrée positive 1 et une entrée négative 1' et à une sortie 2 ; l'entrée 1 est reliée au fil de ligne B par un condensateur C et l'entrée 1' est reliée à un point 3, lui-même relié à la sortie 2 par une résistance R23. Le point 3 est relié à un point 4 connecté au fil de ligne A. Entre les points 3 et 4 on trouve une résistance variable R34 formée, dans l'exemple illustré, par une résistance r de forte valeur et une résistance r' de faible valeur en série avec un interrupteur I. Par ailleurs, la sortie 2 de l'amplificateur opérationnel est reliée, à travers un condensateur C' par une connexion 11 au module de gestion MG, ce dernier commandant l'interrupteur I par une connexion 12. Le circuit peut comprendre, en option, une résistance R41 entre les points 4 et 1.

Le fonctionnement de ce circuit est le suivant. Le dipôle présente, entre les conducteurs A et B, l'impédance :

$$Z = \frac{R34}{(R32 + R41)} \cdot (\frac{1}{C.p} + R41)$$

Si la constante de temps R41.C est assez grande (30 ms), cette impédance peut être considérée comme purement résistive à toute fréquence intéressante, tant pour la numérotation (par quelque procédé que ce soit) que pour les signaux de conversation. On a alors :

$$Z = \frac{R34.R41}{(R34 + R41}$$

Z se comporte ainsi comme la mise en parallèle des résistances R34 et R41 entre les fils A et B.

On peut donner à R41 une valeur suffisamment grande pour qu'elle ne perturbe pas le fonctionnement normal de la ligne téléphonique et que la condition précitée sur la constante de temps soit toujours vérifiée (R41 > 5000 Ohms), C > 6 microFarads). En donnant à R34 une valeur de même ordre de grandeur (voire infinie) par l'ouverture du commutateur I (commandé par le module G), la ligne est disponible. En donnant à R34 une valeur suffisamment faible (< 50 Ohms) par la fermeture du commutateur I, la ligne est bloquée. Il faut remarquer que cet état bloqué ne modifie pas, à court terme, la différence de potentiel entre les fils A et B.

La résistance R23 permet de relever au point 2 une tension électrique représentative du courant délivré sur la ligne téléphonique par le dipôle :

$$V3 - V2 = k \frac{R23}{R34} I$$

où k a la dimension d'une résistance.

Cette indication n'est significative que lorsque le dipôle est placé dans la situation de bloquer l'émission de la numérotation vers le central téléphonique et c'est alors la seule possibilité d'analyser les tentatives de numérotation. Cette tension V2 est renvoyée à cette fin vers le module G.

En variante de ce circuit, on pourrait commander la résistance R41 au lieu de la résistance R34, ce qui permettrait d'imposer une fréquence de coupure faible qui bloquerait la ligne, ou élevée, qui la libérerait totalement.

Le dipôle de la figure 4 diffère de celui de la figure 3 par le fait que l'amplificateur opérationnel AMP voit sa polarisation commandée par le module de gestion MG par la connexion 13. Placé dans un état inactif (courant de sortie nul) l'amplificateur présente une sortie à haute impédance. Placé dans son état actif normal, la sortie est à basse impédance.

Par ailleurs, la figure 4 montre un circuit amplificateur formé par les transistors Q1 et Q2. Ce circuit permet d'envoyer au module de gestion MG, par la connexion 14, un courant plus intense que le courant disponible sur la sortie 2 de l'amplificateur opérationnel AMP.

Le pont de transistors Q1, Q2 n'est pas spécifique du schéma de la figure 4. Fonctionnant en amplificateur de courant il peut être tout aussi nécessaire dans le schéma 3. Il est supposé éventuellement inclus dans "l'amplificateur opérationnel".

La figure 5 montre l'organisation générale du module de gestion. Ce module comprend un automate microprogrammé AUT, un moyen TN d'analyse des tentatives de numérotation et un organe S permettant de renvoyer sur la ligne téléphonique des signaux (tonalités, messages parlés enregistrés ou produits par synthèse de parole, etc...). Ces signaux sont destinés à l'utilisateur pour le guider dans la mise en oeuvre du dispositif. Les signaux produits par l'organe S doivent être transmis au point 1 du dipôle par la connexion 15 et par l'intermédiaire de la capacité C. L'amplificateur opérationnel AMP du dipôle fonctionne alors en suiveur de tension avec comme impédance de sortie la valeur de R34, réputée faible dans cette situation.

Le module comprend encore un circuit AL pour l'alimentation des divers organes.

Le module est programmé pour réaliser un automate fini dont les différents états sont représentés schématiquement sur la figure 6, où la signification des repères littéraux est la suivante :
- les lettres cerclées R, D, D', Ch, Ch', C représentent des états,
- les flèches marquent des changements d'état dans les cas suivants :
d : décrochage de la ligne,
r : raccrochage,
code : code confidentiel
# code : code erroné.

L'état R est l'état de repos du dispositif : la ligne est raccrochée (différence de potentiel supérieure 30 volts entre A et B).

Dès détection de l'état "décroché" de la ligne (différence de potentiel inférieure à 20 Volts), le dispositif passe dans l'état D, le commutateur I du dipôle est fermé, ce qui bloque ainsi la ligne téléphonique ; le module se met à analyser les tentatives de numérotation. Il peut être prévu que les codes erronés interdisent le fonctionnement du dispositif pendant un certain temps pour accroître le niveau de sécurité. Seule la réception du code confidentiel correct fait passer le dispositif dans l'état intermédiaire D'.

Un code simple particulier (par exemple "0") permet de passer dans l'état C, où le module MG commande l'ouverture du commutateur I, libérant la ligne téléphonique pour son utilisation normale.

Un autre code simple (par exemple "#") permet de passer dans l'état Ch utilisé pour changer le code confidentiel.

Tout tentative de numérotation répondant à la syntaxe correcte fait passer le module dans l'état Ch'. Une nouvelle numérotation du même code est demandée à titre de vérification et fait revenir le module à l'état D. Si la vérification échoue, le module revient à l'état Ch.

A chacun des états de cet automate, le dispositif émet une tonalité ou un message vocal pour guider l'utilisateur dans ses manoeuvres.

Le raccrochement de la ligne téléphonique en n'importe quel état remet le dispositif dans son état initial R.

L'incertitude sur le sens de polarisation de la ligne peut conduire compléter le dipôle DA par un autre, fonctionnellement équivalent, mais de polarité inverse.

## Revendications

1. Dispositif de protection de ligne téléphonique comprenant :
- un circuit d'inhibition apte à être inséré entre les deux fils de la ligne, ce circuit pouvant prendre deux états, l'un de haute impédance autorisant le fonctionnement normal de la ligne, l'autre de basse impédance interdisant le fonctionnement de cette ligne,
- un module de gestion (MG) disposé entre les fils, ce module remplissant les fonctions d'alimentation, de détection de l'état de la ligne, de commande du circuit dans l'un de ses deux états à basse ou à haute impédance ;
le dispositif de l'invention étant caractérisé par le fait que le circuit d'inhibition inséré entre les deux fils de ligne est un dipôle actif (DA) comprenant un amplificateur opérationnel (AMP), ce dipôle étant capable de présenter l'une ou l'autre de ces deux impédances basse et haute, quelle que soit la nature du signal de numérotation, la sortie (2) de l'amplificateur offrant une tension permettant d'analyser les tentatives de numérotation, cette sortie (2) étant reliée, à travers un condensateur (C'), au module de gestion (MG).

2. Dispositif selon la revendication 1, caractérisé par le fait que l'amplificateur opérationnel (AMP) du dipôle actif (DA) possède une entrée positive (1) reliée à un fil de ligne (B) à travers un condensateur (C), une entrée négative (1'), une sortie (2) connectée à une résistance (R23) elle-même reliée, d'une part, à l'entrée négative (1') et, d'autre part, à un autre fil de ligne (A) à travers une résistance variable (R34).

3. Dispositif selon la revendication 2, caractérisé par le fait que la résistance variable (R34) comprend un interrupteur (I) en parallèle sur une résistance (r), l'ensemble présentant, selon l'état de l'interrupteur, une résistance basse ou une résistance haute, cet interrupteur (I) étant commandé par le module de gestion.

4. Dispositif selon la revendication 2, caractérisé par le fait que le dipôle actif (DA) comprend encore une résistance (R41) connectée entre le fil de ligne (A) et l'entrée positive (1) de l'amplificateur opérationnel (AMP).

5. Dispositif selon la revendication 1, caractérisé par le fait que le dipôle actif (DA) comprend un amplificateur opérationnel (AMP) dont le courant de polarisation est commandé par le module de gestion (MG), le réglage de ce courant permettant de placer cet amplificateur dans un état inactif correspondant à une sortie à haute impédance ou dans un état actif correspondant à une sortie à basse impédance, la sortie (2) de l'amplificateur (AMP) constituant le point dont la tension permet d'analyser les tentatives de numérotation, cette sortie étant reliée à travers un condensateur (C') au module de gestion (MG).

FIG. 1

FIG. 2

FIG. 3

FIG. 4

FIG. 5

FIG. 6

**Office européen des brevets**

# RAPPORT DE RECHERCHE EUROPEENNE

Numero de la demande

EP 88 40 2463

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | EP-A-0 126 496 (ITALTEL)<br>* Page 3, ligne 33 - page 16, ligne 22; figures 1-7 *<br>--- | 1 | H 04 M  1/66 |
| A | EP-A-0 006 265 (SODECO)<br>* Page 5, ligne 4 - page 15, ligne 14; figures 1-7 *<br>--- | 1,3 | |
| A | DE-C-3 617 973 (NEUMANN)<br>* Colonne 3, ligne 1 - colonne 5, ligne 24; figure 1 *<br>----- | 1 | |

**DOMAINES TECHNIQUES RECHERCHES (Int. Cl.4)**

H 04 M

**Le présent rapport a été établi pour toutes les revendications**

| Lieu de la recherche | Date d'achèvement de la recherche | Examinateur |
|---|---|---|
| LA HAYE | 29-11-1988 | KEPPENS P.M.R. |